# EUROPEAN PATENT APPLICATION

(11) **EP 2 000 423 A2**
(43) Date of publication of application: **10.12.2008**
(21) Application number: 08157579.7
(22) Date of filing: 04.06.2008
(51) Int. Cl.: B65D 85/10

(54) **Carton of soft packets of cigarettes, containing a reusable rigid box**

(30) Priority: 05.06.2007 IT BO20070401
(71) Applicant: G.D Società per Azioni, 40133 Bologna (IT)
(72) Inventor: Negrini, Stefano, 40012 Calderara di Reno (IT)
(74) Representative: Jorio, Paolo

(57) **Abstract**

A carton (1) of soft packets (3) of cigarettes, having: an outer package (2); a group of soft packets (3) of cigarettes housed inside the outer package (2), and each having an inner package (7) having a first sheet (12) of flexible packing material folded about a respective group (13) of cigarettes; and at least one reusable rigid box (4) housed inside the outer package (2) and containing a soft packet (3) of cigarettes, while the other soft packets (3) of cigarettes serve as refills for the reusable rigid box (4); the inner package (7) of each soft packet (3) of cigarettes having a tear-off top portion (14) separated from the rest of the inner package (7) by a tear line (15).

## Description

### TECHNICAL FIELD

The present invention relates to a carton of soft packets of cigarettes, containing a reusable rigid box.

### BACKGROUND ART

Rigid, hinged-lid packets of cigarettes are currently the most widely marketed, by being easy to produce, practical and easy to use, and by effectively protecting the cigarettes inside.

A rigid, hinged-lid packet of cigarettes comprises an inner package comprising a foil-wrapped group of cigarettes; and a rigid outer package housing the inner package. The outer package comprises a cup-shaped container housing the group of cigarettes and having an open top end; and a cup-shaped lid hinged to the container along a hinge to rotate, with respect to the container, between an open and a closed position opening and closing the open end respectively. A U-folded collar is normally fitted inside the container, and projects partly outwards of the open end to engage a corresponding inner surface of the lid when the lid is in the closed position.

Soft packets of cigarettes are also marketed, and which are cheaper to produce than rigid packets, by employing less packing material. A soft packet of cigarettes, in fact, comprises an inner package identical to that of a rigid packet of cigarettes; and a soft outer package (i.e. made of much thinner packing material than a rigid outer package) which encloses five sides of the inner package, leaving the top wall of the inner package free to withdraw the cigarettes.

A soft packet of cigarettes, however, does not protect the cigarettes nearly as well as a rigid packet, and withdrawal of the cigarettes is more awkward, particularly when the packet is nearly empty. For both these reasons, rigid packets of cigarettes are more popular and by far the most widely marketed.

Environment awareness over the past few years makes it increasingly important to reduce the amount of packing material for disposal, which means soft packets of cigarettes employing less packing material may become more popular.

In an attempt to combine the advantages of soft packets of cigarettes (less packing material) with those of rigid packets (better protection and easy withdrawal of the cigarettes), a reusable rigid box has been proposed for housing a soft packet of cigarettes which, when empty, is replaced with another.

Patent EP1497203B1, for example, describes a carton of packets of cigarettes, having an outer package housing a reusable rigid box, and a number of soft packets of cigarettes arranged, with the reusable rigid box, in a given order and which serve as refills for the reusable rigid box. More specifically, the reusable rigid box contains a soft packet of cigarettes, and is housed inside the carton together with the other soft packets of cigarettes. Conventional soft packets of cigarettes, however, are unsuitable for withdrawing the cigarettes from inside the reusable rigid box, which is often so awkward as to call for partial removal of the soft packet from the reusable rigid box.

### DISCLOSURE OF THE INVENTION

It is an object of the present invention to provide a carton of soft packets of cigarettes, containing a reusable rigid box and designed to eliminate the aforementioned drawbacks while at the same time being cheap and easy to produce.

According to the present invention, there is provided a carton of soft packets of cigarettes, containing a reusable rigid box, as claimed in the accompanying Claims.

### BRIEF DESCRIPTION OF THE DRAWINGS

A number of non-limiting embodiments of the present invention will be described by way of example with reference to the accompanying drawings, in which:
Figure 1 shows a view in perspective, with parts removed for clarity, of a preferred embodiment of a carton of soft packets of cigarettes in accordance with the present invention;
Figure 2 shows a view in perspective of a reusable rigid box of the Figure 1 carton with its lid in the closed position;
Figure 3 shows a view in perspective of a soft packet of cigarettes of the Figure 1 carton;
Figure 4 shows a view in perspective of the Figure 2 reusable rigid box with its lid in the open position and a soft packet of cigarettes partly inserted inside it;
Figure 5 shows a view in perspective of an inner package of the Figure 3 soft packet of cigarettes;
Figure 6 shows a view in perspective of the Figure 5 inner package with a tear-off top portion removed;
Figure 7 shows a view in perspective of an alternative embodiment of a soft packet of cigarettes of the Figure 1 carton;
Figure 8 shows a spread-out view of a sheet of airtight packing material from which to form the Figure 7 inner package;
Figure 9 shows a front view in perspective of a variation of an inner package of the Figure 1 packet;
Figure 10 shows a front view in perspective of a reinforcing member of the Figure 9 inner package;
Figure 11 shows a spread-out view of a sheet of airtight packing material fitted with a reinforcing member and from which to form the Figure 9 inner package.

### PREFERRED EMBODIMENTS OF THE INVENTION

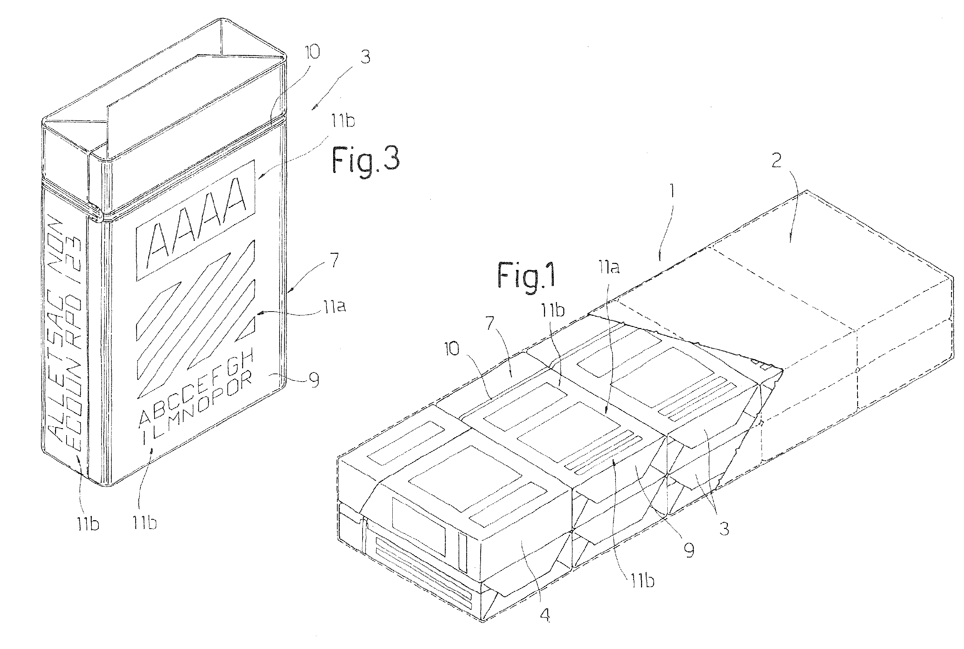

Number 1 in Figure 1 indicates as a whole a carton comprising an outer package 2; a group of soft packets 3 of cigarettes housed inside outer package 2; and at least one reusable rigid box 4 side by side with and arranged in a given order with soft packets 3 inside outer package 2. In the Figure 1 embodiment, outer package 2 comprises a sheet of soft packing material wrapped about the group of soft packets 3 of cigarettes, and which is torn to extract packets 3. Alternatively, outer package 2 may comprise a sheet of rigid packing material forming a rigid hinged-lid box housing the group of soft packets 3 of cigarettes.

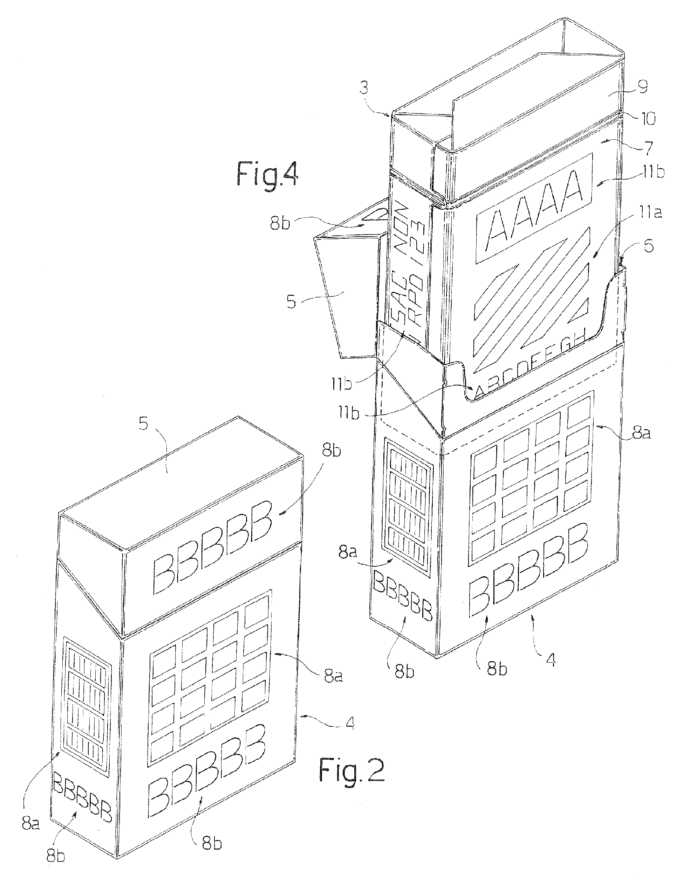

Reusable rigid box 4 is housed inside outer package 2 and contains a soft packet 3 of cigarettes, and the other soft packets 3 of cigarettes serve as refills for reusable rigid box 4. As shown more clearly in Figure 4, reusable rigid box 4 is a closed box comprising a lid 5, which can be opened for access to an opening 6 shaped and sized to permit insertion of a soft packet 3; and the inner shape of reusable rigid box 4 and the outer shape of each soft packet 3 are substantially complementary to enable a soft packet 3 to be inserted completely and closed inside reusable rigid box 4, and to act as a refill for reusable rigid box 4.

In the example shown in the drawings, carton 1 is a conventional soft carton in the form of an elongated rectangular parallelepiped; reusable rigid box 4 is a rectangular parallelepiped-shaped hinged-lid box; and each soft packet 3 comprises a rectangular parallelepiped-shaped inner package 7.

For it to be used repeatedly, reusable rigid box 4 is preferably made of relatively strong material, such as cardboard, plastic or metal, and, at any rate, of printable material, so that the outer surface of reusable rigid box 4 can be printed with graphics indicated as a whole by 8 and comprising images 8a and/or writing 8b.

To make soft packets 3 as environment-friendly and cheap as possible, each preferably only comprises inner package 7, and an airtight overwrapping 9 opened by means of a tear strip 10. In other words, each airtight overwrapping 9 comprises a second sheet of heat-seal packing material wrapped and heat sealed about respective inner package 7; and a tear strip 10 extending about the whole of a top portion of airtight overwrapping 9, and by which to tear open, and subsequently dispose of the top portion of, airtight overwrapping 9.

In the embodiment shown in the drawings, airtight overwrapping 9, which may be transparent or opaque, is also made of printable material, so its outer surface can be printed with graphics indicated as a whole by 11, and comprising images 11a and/or writing 11b, not necessarily the same as graphics 8.

In actual use, after opening outer package 2, the user extracts reusable rigid box 4, and, after opening and finishing the original packet 3 inside reusable rigid box 4, refills reusable rigid box 4 with successive soft packets 3 until carton 1 is empty. Obviously, before or after inserting a soft packet 3 of cigarettes inside reusable rigid box 4, the top portion of airtight overwrapping 9 must be torn off using tear strip 10 for easy access to inner package 7 of soft packet 3 of cigarettes.

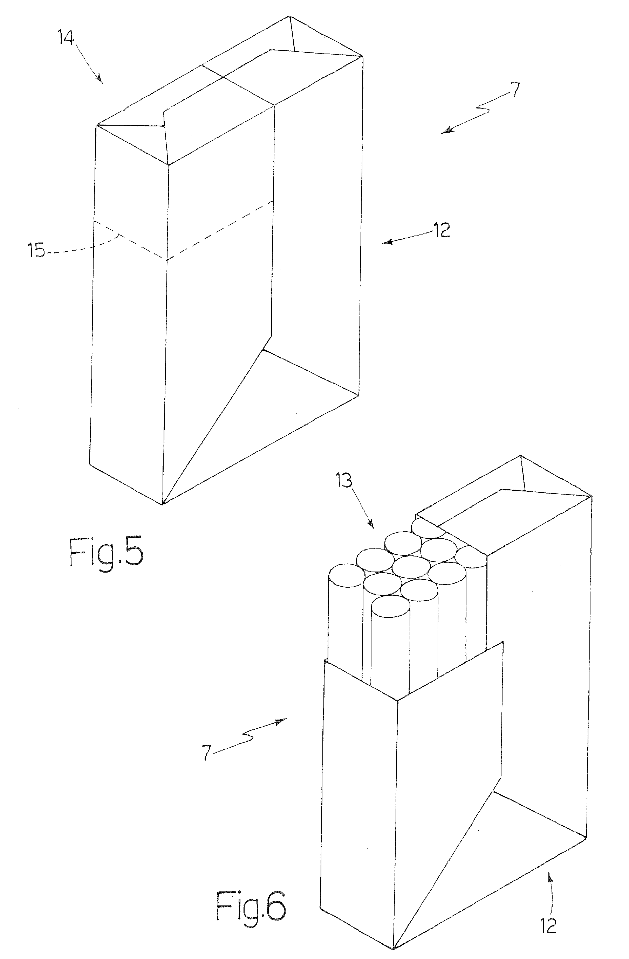

In the Figure 5 and 6 embodiment, inner package 7 of each soft packet 3 of cigarettes comprises a first sheet 12 of flexible packing material, which is folded about a respective group 13 of cigarettes and has a tear-off top portion 14 separated from the rest of inner package 7 by a tear line 15. Tear-off top portion 14 preferably covers part of a top wall and part of a front wall of inner package 7, and, when unsealing soft packet 3 of cigarettes, is removed and disposed of to permit easy access to group 13 of cigarettes even when soft packet 3 of cigarettes is housed inside reusable rigid box 4.

As stated, in the Figure 1-6 embodiment, each soft packet 3 of cigarettes only comprises inner package 7 and airtight overwrapping 9, which is therefore applied on top of and directly contacting inner package 7. In a preferred embodiment, each inner package 7 has no glue, and is stabilized by respective airtight overwrapping 9, and a top wall of inner package 7 has no cover flap or similar.

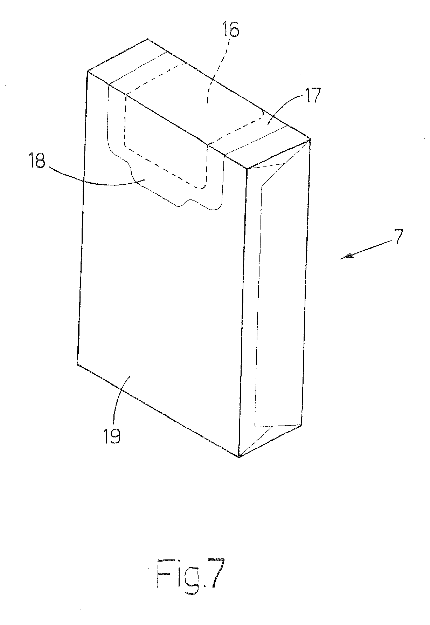

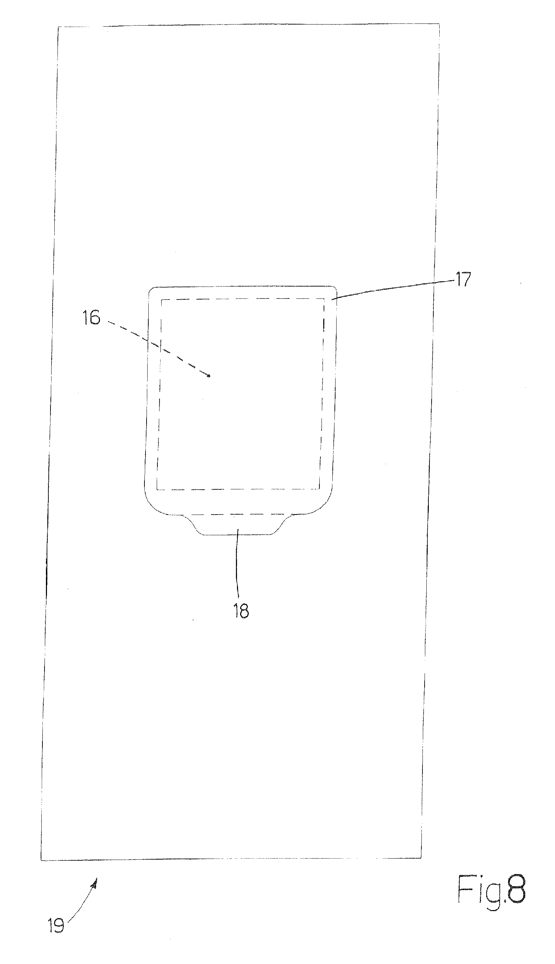

In a different embodiment shown in Figures 7 and 8, inner package 7 of each soft packet 3 of cigarettes has, at the top and front, a rectangular cigarette extraction opening 16 closed by a reusable cover flap 17. More specifically, extraction opening 16 involves a portion of a top wall and a portion of a front wall of inner package 7.

In a preferred embodiment, each cover flap 17 is fixed to inner package 7 using non-setting re-stick adhesive, which is applied to the underside surface of cover flap 17 and extends about the whole of extraction opening 16, so cover flap 17 can be repeatedly detached partly from inner package 7 (i.e. each time packet 3 of cigarettes is opened) and then fixed back onto inner package 7. Cover flap 17 preferably has a bottom grip tab 18, by which to grip and lift up cover flap 17, and which has no re-stick adhesive and rests on a front wall of a collar of reusable rigid box 4 (obviously, when the respective soft packet 3 of cigarettes is inserted inside reusable rigid box 4). In other words, to lift up cover flap 17, the user simply grips grip tab 18, which is in no way fixed to the front wall of the collar of reusable rigid box 4. Grip tab 18 of each cover flap 17 normally forms an integral part of cover flap 17, and is defined by a bottom extension of cover flap 17. In a possible embodiment not shown, for easy grip of grip tab 18, a front wall of the collar of reusable rigid box 4 has a through hole where grip tab 18 of cover flap 17 rests on the collar.

As shown in Figure 8, inner package 7 is formed by folding a rectangular sheet 19 of packing material made of stratified airtight plastic material with an outer coating of heat-seal varnish. Once sheet 19 of packing material is folded about group 13 of cigarettes to form inner package 7, the form of inner package 7 is preferably stabilized by heat sealing the superimposed portions of sheet 19 of packing material.

Before being folded about group 13 of cigarettes, sheet 19 of packing material is cut to define extraction opening 16; and cover flap 17, gummed on the underside, is then applied to sheet 19 of packing material. That is, the underside surface of the cover flap is coated with re-stick adhesive which, inside extraction opening 16, glues the inner portion of sheet 19 of packing material permanently to cover flap 17, and, outside extraction opening 16, glues sheet 19 of packing material detachably to cover flap 17.

As stated, in the Figure 7 embodiment, sheet 19 of packing material of each inner package 7 is made of heat-seal material, and each inner package 7 is stabilized by heat sealing. And each soft packet 3 of cigarettes only comprises respective inner package 7, i.e. has no airtight overwrapping 9.

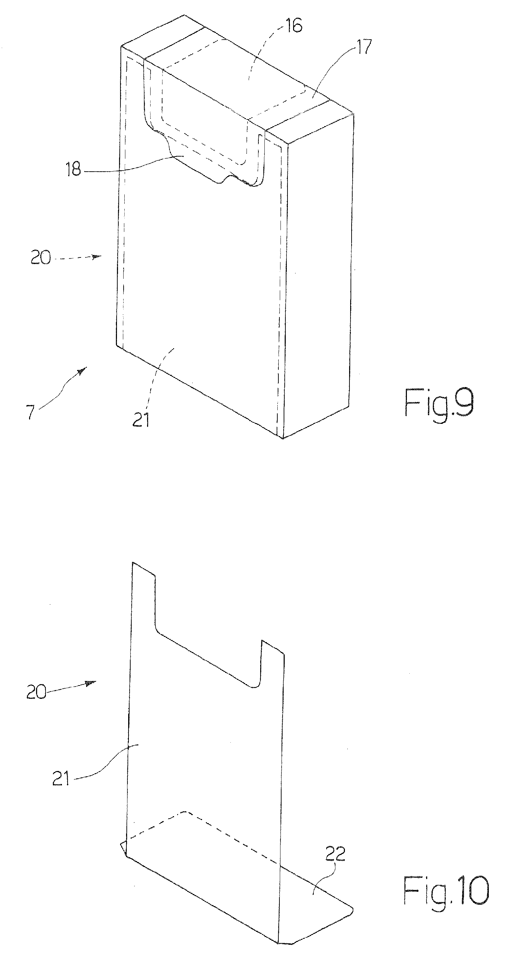

In the Figure 9 variation, inner package 7 comprises a reinforcing member 20 made of rigid cardboard and located inside inner package 7, between group 13 of cigarettes and sheet 19 of packing material, i.e. the inner surface of reinforcing member 20 is positioned contacting group 13 of cigarettes, and the outer surface of reinforcing member 20 is positioned contacting sheet 19 of packing material. At least about extraction opening 16, reinforcing member 20 is fixed to sheet 19 of packing material of inner package 7 to maintain the shape of inner package 7. In other words, even when inner package 7 is partly empty, the fact that sheet 19 of packing material of inner package 7 is fixed to reinforcing member 20 helps to keep the original shape of inner package 7 and prevent it from collapsing, thus making it awkward to extract the remaining cigarettes, and in particular to open and close cover flap 17. In other words, reinforcing member 20 provides for internally stiffening inner package 7 at extraction opening 16.

To do this, reinforcing member 20 need simply be fixed to sheet 19 of packing material of inner package 7 at least about extraction opening 16, i.e. at least close to extraction opening 16, but is preferably fixed completely to sheet 19 of packing material of inner package 7. In a preferred embodiment, reinforcing member 20 is heat sealed, but may alternatively be glued, to sheet 19 of packing material of inner package 7.

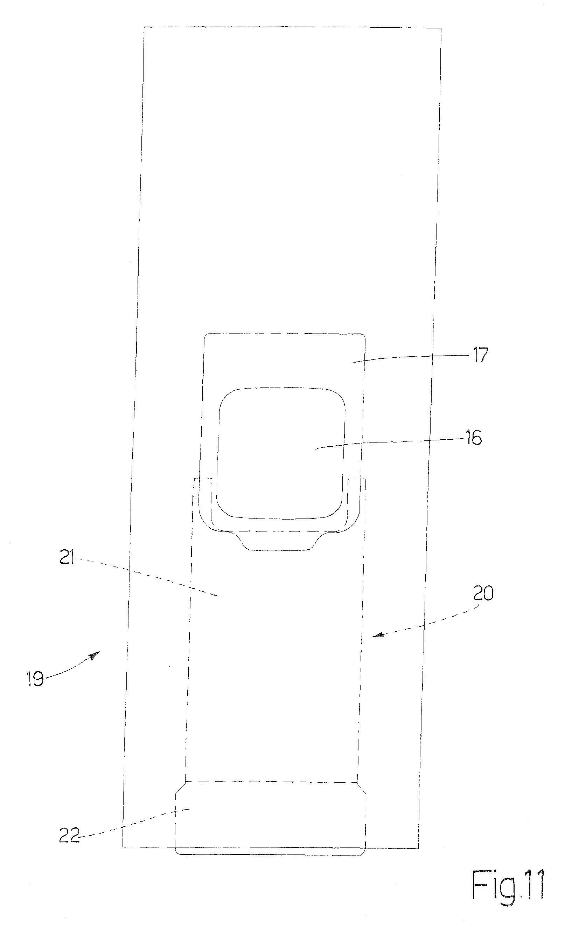

As shown in Figures 10 and 11, reinforcing member 20 comprises a front wall 21 and a bottom wall 22. In a different embodiment not shown, reinforcing member 20 only comprises front wall 21.

In a different embodiment not shown, each cover flap 17 comprises a movable portion; and a fixed border fixed permanently to the outer surface of inner package 7 and separated from the movable portion by a tear line, which is torn the first time cover flap 17 is opened.

Carton 1 of soft packets 3 of cigarettes has numerous advantages : it is easy to produce, employs much less material than a similar carton of rigid packets of cigarettes, and, at the same time, ensures adequate protection of the cigarettes currently being used (i.e. inserted inside the reusable rigid box). Moreover, soft packets 3 of cigarettes are particularly suitable for withdrawing the cigarettes from inside reusable rigid box 4, i.e. the cigarettes in soft packet 3 housed inside reusable rigid box 4 can be withdrawn quickly and easily, with no need to extract the soft packet 3 of cigarettes partly from the reusable rigid box.

## Claims

1. A carton of soft packets of cigarettes, comprising:
an outer package (2);
a group of soft packets (3) of cigarettes housed inside the outer package (2), and each comprising an inner package (7) comprising a first sheet (12) of flexible packing material folded about a respective group (13) of cigarettes; and
at least one reusable rigid box (4) housed inside the outer package (2) and containing a soft packet (3) of cigarettes, while the other soft packets (3) of cigarettes serve as refills for the reusable rigid box (4);
the carton being **characterized in that** the inner package (7) of each soft packet (3) of cigarettes has a tear-off top portion (14) separated from the rest of the inner package (7) by a tear line (15).

2. A carton as claimed in Claim 1, wherein each tear-off top portion (14) involves part of a top wall and part of a front wall of the respective inner package (7).

3. A carton as claimed in Claim 1 or 2, wherein each soft packet (3) of cigarettes comprises an airtight overwrapping (9).

4. A carton as claimed in Claim 3, wherein each airtight overwrapping (9) comprises a second sheet of heat-seal packing material wrapped and heat sealed about the respective inner package (7).

5. A carton as claimed in Claim 4, wherein each airtight overwrapping (9) comprises a tear strip (10) extending about the whole of a top portion of the airtight overwrapping (9), and by which to tear open the airtight overwrapping (9) and remove the top portion of the airtight overwrapping (9).

6. A carton as claimed in Claim 2, 3 or 4, wherein each soft packet (3) of cigarettes only comprises the inner package (7) and the airtight overwrapping (9); the airtight overwrapping (9) being applied on top of the inner package (7) and directly contacting the inner package (7).

7. A carton as claimed in any one of Claims 2 to 6, wherein the inner package (7) has no glue, and is stabilized by the respective airtight overwrapping (9).

8. A carton as claimed in any one of Claims 1 to 7, wherein a top wall of each inner package (7) has no cover flap (17) or similar.

9. A carton of soft packets of cigarettes, comprising:
an outer package (2);
a group of soft packets (3) of cigarettes housed inside the outer package (2), and each comprising an inner package (7) comprising a sheet (12) of flexible packing material folded about a respective group (13) of cigarettes; and
at least one reusable rigid box (4) housed inside the outer package (2) and containing a soft packet (3) of cigarettes, while the other soft packets (3) of cigarettes serve as refills for the reusable rigid box (4) ;
the carton being **characterized in that** the inner package (7) of each soft packet (3) of cigarettes has a cigarette extraction opening (16) closed by a reusable cover flap (17).

10. A carton as claimed in Claim 9, wherein each cover flap (17) has a reusable retaining means for releasably connecting the cover flap (17) to the inner package (7).

11. A carton as claimed in Claim 10, wherein each reusable retaining means comprises non-setting, re-stick adhesive.

12. A carton as claimed in Claim 9, 10 or 11, wherein each inner package (7) comprises a reinforcing member (20) located inside the inner package (7), between the group (13) of cigarettes and a sheet of packing material of the inner package (7).

13. A carton as claimed in Claim 12, wherein each reinforcing member (20) is fixed to the sheet of packing material of the inner package (7), at least about the extraction opening (16).

14. A carton as claimed in Claim 13, wherein each reinforcing member (20) is fixed completely to the sheet of packing material of the inner package (7).

15. A carton as claimed in Claim 12, 13 or 14, wherein each reinforcing member (20) comprises a front wall (21).

16. A carton as claimed in Claim 12, 13 or 14, wherein each reinforcing member (20) comprises a front wall (21) and a bottom wall (22).

17. A carton as claimed in any one of Claims 9 to 16, wherein each cover flap (17) comprises a grip tab (18) with no adhesive.

18. A carton as claimed in Claim 17, wherein, when an inner package (7) is housed inside the reusable rigid box (4), the grip tab (18) of the cover flap (17) rests on a front wall of a collar of the reusable rigid box (4).

19. A carton as claimed in Claim 18, wherein a front wall of the collar of the reusable rigid box (4) has a through hole where the grip tab (18) of the cover flap (17) rests on the collar, to facilitate grip of the grip tab (18).

20. A carton as claimed in Claim 17, 18 or 19, wherein the grip tab (18) of each cover flap (17) forms an integral part of the cover flap (17), and is defined by a bottom extension of the cover flap (17).

21. A carton as claimed in any one of Claims 9 to 20, wherein each cover flap (17) comprises a movable portion; and a fixed border fixed permanently to the outer surface of the inner package (7) and separated from the movable portion by a tear line which is torn the first time the cover flap (17) is opened.

22. A carton as claimed in any one of Claims 9 to 21, wherein the sheet of packing material of each inner package (7) is made of heat-seal material, and each inner package (7) is stabilized by heat sealing.

23. A carton as claimed in any one of Claims 9 to 22, wherein each soft packet (3) of cigarettes only comprises the respective inner package (7).
